# EUROPÄISCHE PATENTSCHRIFT

(11) **EP 0 598 077 B1**
(45) Veröffentlichungstag und Bekanntmachung des Hinweises auf die Patenterteilung: **06.12.1995**
(21) Anmeldenummer: 93909751.5
(22) Anmeldetag: 02.06.1993
(51) Int. Cl.: F16L 37/38

(54) **STECKBARE KUPPLUNG FÜR DRUCKLEITUNGEN**
PLUG-IN COUPLING FOR PRESSURE LINESS
DISPOSITIF D'ACCOUPLEMENT ENFICHABLE POUR CONDUITES SOUS PRESSION

(30) Priorität: 03.06.1992 CH 1807/92
(43) Veröffentlichungstag der Anmeldung: 25.05.1994
(73) Patentinhaber: Hans Oetiker AG Maschinen- und Apparatefabrik, 8812 Horgen (CH)
(72) Erfinder: WUETHRICH, Albrecht, CH-6110 Wolhusen (CH)
(74) Vertreter: Felber, Josef
(86) Internationale Anmeldenummer: CH9300142
(87) Internationale Veröffentlichungsnummer: WO9324781

(56) Entgegenhaltungen:
- EP-A- 0 327 494
- DE-A- 3 843 995
- DE-U- 9 013 145
- FR-A- 2 028 653
- FR-A- 2 068 039
- GB-A- 1 503 647
- US-A- 2 493 271

## Beschreibung

Die vorliegende Erfindung betrifft eine steckbare Kupplung für Leitungen von Druckmedien, die unter anderem aus einer Kupplungsbuchse und einem Kupplungsstecker besteht, wobei als Druckmedien sowohl komprimierbare als auch nicht komprimierbare, fliessfähige Medien in Betracht kommen.

Herkömmliche lineare Kupplungen für Druckleitungen bestehen ganz allgemein aus einem Kupplungsstecker und einer Kupplungsbuchse sowie einem Mechanismus mit Verriegelung, der die Buchse und den Stecker zusammenhält, und weiter einer Sperrvorrichtung, die das Ausfliessen bzw. das Ausströmen des unter Druck stehenden Mediums bei gelöster Kupplung unterbindet. Um eine leitende Verbindung herzustellen, wird bei den meisten Kupplungen der Kupplungsstecker in die Kupplunssbuchse gesteckt und mit Hilfe eines Verriegelungssystems wird der Stecker in der Buchse festgehalten. Beim Einstecken des Kupplungssteckers in die Buchse wird die Sperrfunktion der Kupplung gelöst und das Medium kann durch die Kupplung hindurchströmen. Wird die Kupplung gelöst so wird auch der Durchfluss wieder unterbrochen. Sowohl beim Einkuppeln und Verriegeln als auch beim Lösen der Verriegelung und Entkuppeln einer solchen Kupplung muss dabei der Stecker gegen die Buchse hin gedrückt werden. Die dazu notwendige Kraft hängt dabei vom inneren Druck in der Druckleitung und der wirkenden Querschnittsfläche der Kupplung ab. Die wirkende Querschnittsfläche setzt sich einerseits zusammen aus der inneren Querschnittsfläche des Steckers bzw. der Buchse und anderseits der materiellen, ringförmigen Querschnittsfläche des Steckers bzw. der Buchse, auf die beim Lösen der Sperrvorrichtung der Kupplung das unter Druck stehende Medium wirkt. Um den Stecker in die Buchse zu stecken und zu verriegeln, oder umgekehrt, um den Kupplungsstecker in der Kupplungsbuchse aus der verriegelten Lage zu lösen, bedarf es bei hohen Drucken eines grossen Kraftaufwandes. Der Kupplungsbzw. der Entkupplungsvorgang kann wegen des grossen Kraftaufwandes meistens nicht mit einer Hand ausgeführt werden, da gleichzeitig der Kupplungsstecker gegen die Kupplungsbuchse gedrückt und der Verriegelungsmechanismus betätigt werden muss.

Im Gegensatz zu den linearen Kupplungen dient bei den Schwenkkupplungen ein schwenkbares Sperrorgan als Kupplungsbuchse, welches im entkuppelten Zustand gleichzeitig den Durchfluss sperrt. Eine solche Kupplung ist in der EP-A-0 327 494 gezeigt. Der Kupplungsstecker wird drucklos unter einem schiefen Winkel zur Druckleitung in das in einem Kupplungsgehäuse schwenkbar gelagerte Sperrorgan gesteckt. Die Druckleitung ist nach diesem Einstecken noch unterbrochen. Durch Schwenken des Kupplungssteckers und damit des Sperrorgans im Innern des Kupplungsgehäuses wird die Kupplung in eine lineare und leitende Lage gebracht. Sobald der Stecker die lineare Lage erreicht hat, wird das Sperrorgan gegen ein Verschwenken gesichert, indem der Stecker von dem in der Druckleitung herrschenden Druck in der Buchse geringfügig zurückgeschoben wird und damit in eine Ausnehmung im Inneren des Kupplungsgehäuses gedrückt wird. Damit ist die Kupplung verriegelt. Dieser Vorgang des Einkuppelns und Verriegelns kann mit relativ geringem Kraftaufwand geschehen, denn es müssen nur die auf das Sperrorgan wirkenden Reibungskräfte beim Schwenken überwunden werden. Hingegen das Auskuppeln erfordert einen relativ hohen Kraftaufwand. Zum Entriegeln des schwenkbaren Sperrorgan muss nämlich zuerst der Stecker aus der Ausnehmung im Kupplungsgehäuse heraus gegen die Kupplungsbuchse hin gedrückt werden. Die hierzu nötige Kraft hängt vom Druck in der Druckleitung ab und kann erheblich sein. Beim anschliessenden Schwenkvorgang nimmt das Sperrorgan der Kupplung eine den Durchfluss sperrende Lage ein und streicht dann über eine Entlastungsbohrung im Kupplungsgehäuse. In dieser Schwenklage wird ein Druckausgleich zwischen dem Innern des zu lösenden Kupplungssteckers und der Umgebung hergestellt. Dann wird das Sperrorgan weiter geschwenkt, sodass zuletzt der Stecker drucklos aus der Buchse entfernt werden kann.

Bei beiden oben erwähnten Arten von Kupplungen - nämlich bei der linearen Kupplung und auch bei der Kupplung mit schwenkbarem Sperrorgan - befindet sich die Dichtung zwischen Kupplungsbuchse und Kupplungsstecker entweder in der Buchse und die Steckeraussenseite bildet eine Dichtfläche, oder die Buchseninnenseite bildet eine Dichtfläche und die Dichtung befindet sich auf der Steckeraussenseite. Diese Bauarten haben den Nachteil, dass die Dichtfläche oder die Dichtung der Kupplung leicht beschädigt werden können, da sie nach aussen abgewandt sind. Im praktischen Einsatz ist meistens der Kupplungsstecker an einem losen Schlauchende montiert. Ist er gerade nicht eingekuppelt, so ist seine Dichtfläche leicht verletzbar und verschmutzt rasch. Frei am Boden liegende Kupplungsstecker werden zum Beispiel durch das Überrollen mit Fahrzeugen, durch das Nachziehen des Schlauches am Boden und andere Einwirkungen an den Dichtflächen beschädigt. Dies führt zu einer erhöhten Abnutzung und zu raschem Verschleiss der Kupplungsteile. Bei einer Beschädigung der Dichtfläche oder der Dichtung ist die Kupplung undicht und der defekte Kupplungsteil muss ersetzt werden.

Es ist die Aufgabe der vorliegenden Erfindung, eine steckbare Kupplung zu schaffen, die leichter bedienbar ist und insbesondere bei einem bestimmten inneren Durchlassquerschnitt mit reduziertem Kraftaufwand gegenüber bisher bekannten steckbaren Kupplungen kuppelbar oder verriegel- und entriegelbar ist, und bei der die Abnützung der Kupplungselemente verringert ist und dadurch die Lebensdauer gegenüber herkömmlichen Kupplungen länger ist.

Diese Aufgabe löst eine steckbare Kupplung für Druckleitungen, mit einem Kupplungsstecker und einer Kupplungsbuchse, die sich dadurch auszeichnet, dass die Kupplungsbuchse zwei aneinander anschliessende axiale Bohrungen mit unterschiedlichen Durchmessern aufweist, wobei von der grösseren Bohrung her mit ihrem Durchmesser eine Ringnut um die Bohrung des kleineren Durchmessers herum ausgenommen ist, sodass ein Nippel gebildet wird, wobei der Kupplungsstecker dichtend in die Ringnut einsteckbar ist.

Unterschiedliche Ausführungen der erfindungsgemässen Kupplung gehen aus den abhängigen Ansprüchen hervor und ihr jeweiliger Aufbau wird in der nachfolgenden Beschreibung erläutert.

In den Zeichnungen sind beispielsweise Ausführungen der Kupplung dargestellt.

Es zeigt:
- Figur 1:: Die Kupplungselemente Stecker und Buchse in einer Schnittzeichnung, wobei sich das Dichtelement im Stecker befindet;
- Figur 2:: Die Kupplungselemente Stecker und Buchse in einer Schnittzeichnung, wobei sich das Dichtelement in der Buchse befindet;
- Figur 3:: Eine Ausführung der erfindungsgemässen Kupplung mit einem schwenkbaren Sperrorgan in einer Explosionsdarstellung;
- Figur 4:: Darstellung eines in verschiedenen Schwenklagen verriegelbaren Sperrorgans einer steckbaren Kupplung;

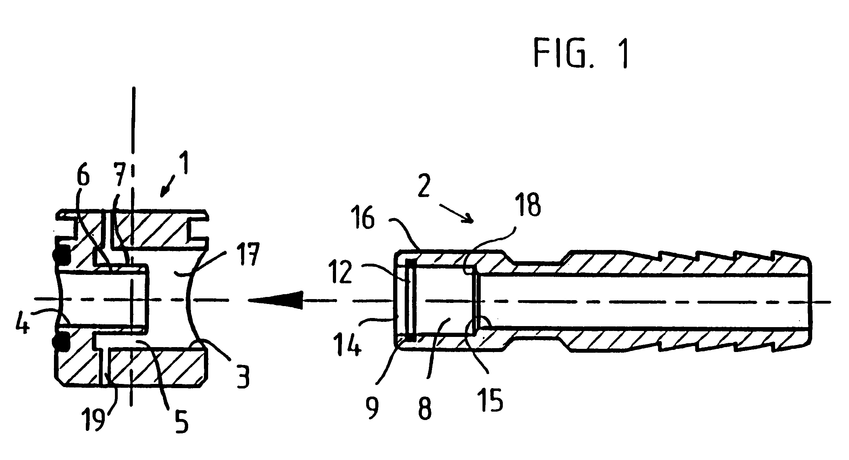

Die Figur 1 zeigt die Kupplungsbuchse 1 und den Kupplungsstecker 2 einer erfindungsgemässen Kupplung. Die Kupplungsbuchse 1 ist hier als schwenkbares Sperrorgan ausgebildet, das in ein Gehäuse einer Schwenkkupplung einsetzbar ist. Für lineare Kupplungen hat die Buchse aussen eine andere Form. Wesentlich ist die innere Ausgestaltung der Buchse 1. Sie weist nämlich zwei aneinander anschliessende axiale Bohrungen 3;4 mit unterschiedlichen Durchmessern auf. Von der Seite der grösseren Bohrung 3 her ist koaxial zu den Bohrungen 3;4 eine Ringnut 5 um die kleinere Bohrung 4 herum ausgenommen, deren äusserer Durchmesser der grossen Bohrung 3 entspricht. Die Breite und die Tiefe der Ringnut 5 sind so gewählt, dass der Kupplungsstecker 2 passgenau in die Ringnut 5 einsteckbar ist. Der Aussendurchmesser des Nippels 6, der durch die Ringnut 5 und die kleinere Bohrung 4 gebildet wird, soll möglichst klein sein, denn dieser Durchmesser bestimmt die wirkende Querschnittsfläche, die ihrerseits mit dem Überdruck im Inneren der Kupplung die Kraft bestimmt, die notwendig ist, um den Stecker 2 in die Buchse drücken zu können. Bei einem bestimmten Durchflussquerschnitt, welcher vom Innendurchmesser der Bohrung 4 gegebenen ist, soll deshalb die Wandstärke des Nippels 6 möglichst dünn sein. Die äussere, glatte Oberfläche 7 des Nippels 6 bildet in der hier gezeigten Ausführung eine Dichtfläche. Beim zugehörigen Stecker 2 ist aus dessen Innenseite eine Kreisnut 12 ausgenommen, in welcher ein O-Ring als Dichtelement 9 eingelegt ist. Beim Zusammenstecken der Kupplungselemente 1;2 wird der Stecker 2 in einer ersten Phase soweit in die Bohrung 3 der Kupplungsbuchse 1 eingesteckt, dass das in der Kreisnut 12 des Steckers 2 liegende Dichtelement 9 dichtend über den Nippel 6 zu liegen kommt. In dieser Phase des Zusammenkuppelns von Stecker 2 und Buchse 1, bis das Dichtelement 9 die Dichtfläche 7 erreicht, wirkt der Druck auf die volle Querschsittsfläche des Steckers 2.

In einer zweiten Phase des Zusammenkuppelns, sobald nämlich das Dichtelement 9 auf den Nippel 6 aufgeschoben ist, kann der Druck in Steckerrichtung nur noch auf jene Fläche 18 am Stecker 2 wirken, die innerhalb der Dichtung 9 dem Druck ausgesetzt ist. Durch diese Stecker-Buchsen-Ausgestaltung mit dem charakterisierenden Nippel 6 in der Buchse 1 wird der am Stecker dem Druck ausgesetzte Querschnitt also erheblich reduziert. Damit das in der Ringnut 5 vorhandene Medium beim Einstecken des Steckers 2 ausweichen kann, führen ab der Nähe des Bodens der Bohrung, welche die Ringnut 5 bildet, ein oder mehrere Entlastungsbohrungen 19 nach aussen.

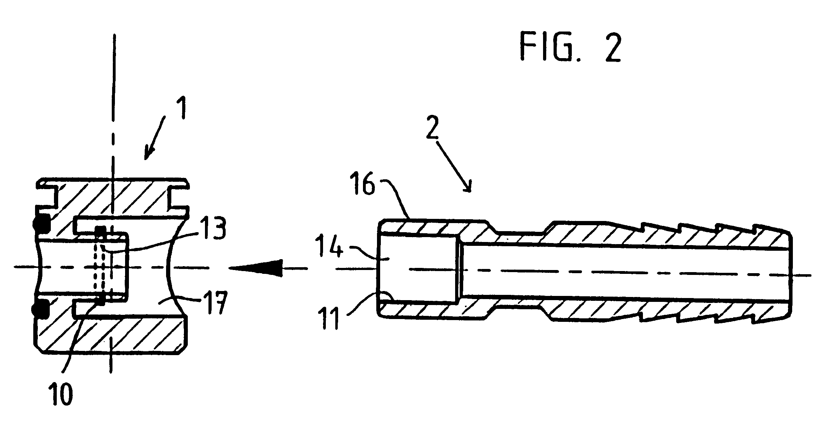

Figur 2 zeigt eine Ausführungsvariante, die im wesentlichen der vorher beschriebenen Ausführung entspricht, nur dass hier das Dichtelement 10 in einer Kreisnut 13 liegt, die aus der Aussenseite 7 des Nippels 6 ausgenommen ist. Die Innenseite 11 des Kupplungsteckers 2 bildet entsprechend die zugehörige Dichtfläche.

Mit der Formgebung der Buchse 1 und des dazugehörigen Steckers 2 der erfindungsgemässen Kupplung wird bei einem gegebenen Durchflussquerschnitt erreicht, dass die Querschnittsfläche, auf die der innere Druck beim Kuppeln und Lösen der Kupplung wirkt, verkleinert wird, ohne dabei den Durchflussquerschnitt, dessen Durchmesser der Bohrung 4 der Buchse 1 und dem Innendurchmesser 15 des Steckers 2 entspricht, zu verringern. Der Durchmesser der Querschnittsfläche, auf die der Druck des Mediums wirkt, entspricht dem Innendurchmesser der Öffnung 14 des Steckers 2. Bei herkömmlichen Steckern befindet sich das Dichtelement der Kupplung zwischen der Aussenseite 16 des Kupplungssteckers 2 und der Innenseite 17 der Bohrung 3 der Kupplungsbuchse 1. Der in diesem Fall wirkende Querschnitt hat den Durchmesser der Bohrung 3 der Kupplungsbuchse 1. Aus dem Unterschied der beiden genannten Durchmesser, nämlich dem Innendurchmesser der Öffnung 14 und dem Innendurchmesser der Bohrung 3, bzw. deren entsprechenden Querschnittsflächen, resultiert die Reduktion des Kraftaufwandes, der beim Zusammendrücken von Kupplungsstecker und Kupplungsbuchse erforderlich ist.

Ein weiterer Vorteil der in Figur 1 und Figur 2 beschriebenen Bauarten der erfindungsgemässen Kupplung gegenüber herkömmlichen Kupplungen liegt darin, dass sowohl die Dichtung als auch die Dichtungsfläche innen liegen, somit vor mechanischen Einwirkungen geschützt sind und damit wesentlich geringeren äusseren mechanischen Abnützungen unterliegen, was zu einer besseren Dichtigkeit, somit zu einer höheren Betriebssicherheit von angeschlossenen Maschinen und einer Verlängerung der Lebensdauer der Kupplung führt.

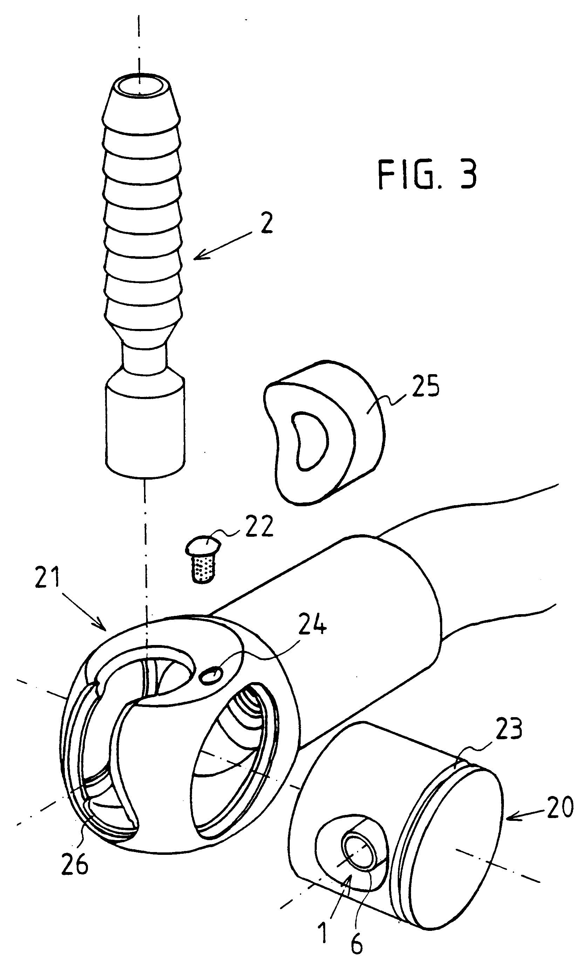

Figur 3 zeigt eine Variante einer erfindungsgemässen steckbaren Kupplung für Druckleitungen, bei der die Kupplungsbuchse 1 im Inneren eines schwenkbaren Sperrorganes 20 angeordnet ist. Die Kupplung ist hier in einer Explosionsdarstellung, also in zerlegtem Zustand, dargestellt. Das einstückige Sperrorgan 20 ist in einem Gehäuse 21 mittels der Dichtung 25 dichtend gelagert und ist mit einem Kerbnagel 22 darin gesichert. Die Dichtung 25 ist im zusammengebauten Zustand im Gehäuse 21 eingelegt und weist eine gekrümmte Dichtfläche auf, die dann an der Aussenseite des Sperrorgans 20 dichtend anliegt. Der Kerbnagel 22 steckt in einer Bohrung 24 im Gehäuse 21 und greift in eine ringförmige Nut 23 im Sperrorgan 20 ein. Durch Einstecken des Kupplungssteckers 2 in die Kupplungsbuchse 1 und durch Schwenken des Sperrorganes 20 kann die Kupplung von einer sperrenden Lage in eine leitende Lage gebracht werden. Sobald der Stecker 2 die lineare Lage erreicht hat, wird er durch den in der Druckleitung herrschenden Druck leicht aus der Buchse 1 hinaus in eine Ausnehmung 26 im Kupplungsgehäuse 21 gedrückt und rastet in dieser Position ein. Der Kupplungsstecker 2 und somit auch das Sperrorgan 20, in welchem er steckt, kann jetzt nicht mehr geschwenkt werden und die Kupplung ist verriegelt. Zum Entriegeln muss der Stecker 2 leicht in Richtung gegen die Buchse 1 hin gedrückt werden, womit er aus der Ausnehmung 26 geschoben wird und das Sperrorgan 20 zum Schwenken freigibt. Dieses Zurückschieben des Steckers 2 ist die Manipulation, welche bei grossen Leitungsdurchmessern und bei hohen Drucken mit der hier gezeigten Stecker-Buchsen-Ausformung erheblich erleichtert wird, indem der dazu erforderliche Kraftaufwand bedeutend reduziert wird. Beim anschliessenden Schwenken des Kupplungssteckers 2 nimmt dieser das Sperrorgan 20 wieder mit und dieses wird dabei in die sperrende Lage gebracht. Dabei überstreicht die das Sperrorgan 20 durchsetzende Bohrung auf der dem Stecker 2 abgewandten Seite eine dort im Gehäuse 21 vorhandene Entlastungsbohrung, durch die ein Druckausgleich zwischen der Umgebung und dem Inneren des Kupplungssteckers hergestellt wird. In der ganz zurückgeschwenkten, sperrenden Position des Sperrorgans 20 kann der Kupplungsstecker 2 schliesslich drucklos aus der Kupplungsbuchse 1 gezogen werden, in der Zeichnung also nach oben. Durch den Einsatz der erfindungsgemässen Stecker-Buchsen-Ausformung an einer Kupplung wird erreicht, dass das Entriegeln einer solchen Kupplung mit schwenkbarem Sperrorgan bei einem vorgegebenen Durchflussquerschnitt mit erheblich verringertem Kraftaufwand im Vergleich zu bisher durchführbar ist.

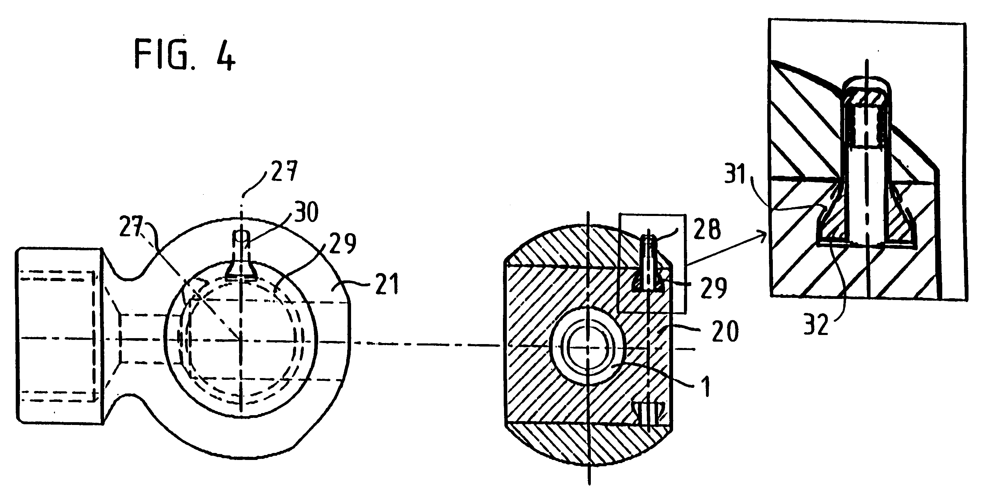

Eine Variante der erfindungsgemässen steckbaren Kupplung mit schwenkbarem Sperrorgan wird in Figur 4 gezeigt. Die Kupplungsbuchse 1 ist in einem einstückigen Sperrorgan 20 untergebracht, das in einem Kupplungsgehäuse 21 gelagert ist.

Mit dem eingesteckten Kupplungsstecker kann das Sperrorgan 20 wiederum durch Schwenken in eine leitende, in eine druckentlastende und in eine sperrende Position 27 gebracht werden. In jeder dieser Positionen 27 kann die Schwenklage des Sperrorgans 20 gesichert werden. Durch Drücken eines Knopfes am Gehäuse 21 kann das Sperrorgan 20 entriegelt und in die entsprechende Lage zum Entkuppeln geschwenkt werden. Hierzu durchsetzt ein federbelasteter Dorn 28 das Gehäuse 21 in radialer Richtung bezüglich des schwenkbaren Sperrorgans 20. Dieser Dorn hat ein schwalbenschwanzartig verdicktes Ende 32, mit welchem er beim Schwenken des Sperrorgans 20 in einer dem Querschnitt der Verdickung 32 entsprechenden Nut 29 läuft, die sich um einen Teil des Umfangs des Sperrorgans 20 erstreckt. An den Verriegelungsstellen 27 weist die Nut 29 im Sperrorgan 20 in radialer Richtung zum Sperrorgan 20 Ausnehmungen 31 auf, in welche das verdickte Ende 32 des Dorns 28 einpasst. Wird das Sperrorgan 20 in eine der Verriegelungsstellen 27 geschwenkt, so rastet durch die Federbelastung das verdickte Ende 32 des Dorns 28 formschlüssig in die dortige Ausnehmung 31 ein. Damit ist das Sperrorgan 20 fixiert und kann erst durch Hineindrücken des Dorns 28 gegen das Sperrorgan 20 hin aus dieser Lage in eine andere Position geschwenkt werden.

## Patentansprüche

1. Steckbare Kupplung für Druckleitungen, mit einem Kupplungsstecker (2) und einer Kupplungsbuchse (1), wobei die Kupplungsbuchse (1) zwei aneinander anschliessende axiale Bohrungen (3;4) mit unterschiedlichen Durchmessern aufweist, dadurch gekennzeichnet, dass von der grösseren Bohrung her mit ihrem Durchmesser eine Ringnut (5) um die Bohrung (3) des kleineren Durchmessers (4) herum ausgenommen ist, sodass ein Nippel (6) gebildet wird, wobei der Kupplungsstecker (2) dichtend in die Ringnut (5) einsteckbar ist.

2. Steckbare Kupplung für Druckleitungen nach Anspruch 1, dadurch gekennzeichnet, dass der von der Ringnut (5) eingeschlossene Nippel (6) mit seiner glatten äusseren Oberfläche eine Dichtfläche (7) bildet, und dass sich im Inneren (8) des Kupplungssteckers (2) ein Dichtelement (9) befindet.

3. Steckbare Kupplung für Druckleitungen nach Anspruch 1, dadurch gekennzeichnet, dass auf der Aussenseite (7) des von der Ringnut (5) eingeschlossenen Nippels (6) eine Kreisnut (13) ausgenommen ist, in welche ein Dichtelement (10) eingelegt ist, und dass die Innenseite (8) des Steckers (2) eine glatte Dichtfläche bildet.

4. Steckbare Kupplung für Druckleitungen nach einem der vorhergehenden Ansprüche, dadurch gekennzeichnet, dass die Dichtelemente (9;10) Formteile sind, die in entsprechende Kreisnuten (12;13) eingelegt sind.

5. Steckbare Kupplung für Druckleitungen nach einem der vorhergehenden Ansprüche, dadurch gekennzeichnet, dass die Kupplungsbuchse (1) im Innern eines schwenkbaren Sperrorganes (20) angeordnet ist, und dieses Sperrorgan in einem Gehäuse (21) dichtend gelagert ist, wobei das Sperrorgan (20) mit dem eingesteckten Stecker (2) durch Schwenken von einer leitenden Lage in eine sperrende Lage oder umgekehrt bringbar ist.

6. Steckbare Kupplung für Druckleitungen nach Anspruch 5, dadurch gekennzeichnet, dass die Kupplungsbuchse (1) das Sperrorgan (20) bildet und aus einem Stück besteht.

7. Steckbare Kupplung für Druckleitungen nach einem der vorhergehenden Ansprüche, dadurch gekennzeichnet, dass das schwenkbare Sperrorgan (20) in einer oder mehreren Schwenklagen verriegelbar ist, indem ein federbelasteter Dorn (28) das Gehäuse (21) radial zum schwenkbaren Sperrorgan (20) durchsetzt und mit seinem schwalbenschwanzartig verdickten Ende bei Schwenkung des Sperrorgans (20) formschlüssig in einer entsprechenden, sich um einen Teil des Umfangs erstreckenden Nut (29) im Sperrorgan (20) läuft, welche an den Verriegelungsstellen (27) in bezug auf das Sperrorgan (20) in radialer Richtung Ausnehmungen (31) aufweist, derart, dass die Verdickung (32) unter der Federbelastung in die Ausnehmungen (31) einrastet.

8. Steckbare Kupplung für Druckleitungen nach Anspruch 5 oder 6, dadurch gekennzeichnet, dass das Sperrorgan (20) zylindrisch ist und im Gehäuse (21) in axialer Richtung gesichert ist, indem ein Kerbnagel (22) durch das Gehäuse (21) in eine Kreisnut (23) im Sperrorgan (20) eingreift.

9. Steckbare Kupplung für Druckleitungen nach Anspruch 4, dadurch gekennzeichnet, dass das Sperrorgan (20) in ein oder mehreren Schwenklagen mittels eines Dornes (28), welcher durch das Gehäuse (21) in eine Bohrung (30) im Sperrorgan (20) eingreift, verriegelbar ist.

10. Steckbare Kupplung für Druckleitungen nach einem der Ansprüche 5 bis 9, dadurch gekennzeichnet, dass an der Buchse (1) mindestens eine Entlastungsbohrung (19) von aussen in die Ringnut (5) mündet.

## Claims

1. A pluggable coupling for pressure lines, having a male coupling connector (2) and a female coupling connector (1), wherein the female coupling connector (1) has two axial bores (3,4) of different diameters which follow each other, characterized in that an annular groove (5) is cut in the diameter of the larger bore around the bore (3) of lesser diameter (4) so that a nipple(6) is formed, wherein the male coupling connector (2) can be sealingly inserted into the annular groove (5).

2. A pluggable coupling for pressure lines in accordance with claim 1, characterized in that the nipple (6) enclosed by the annular groove (5) forms a sealing face (7) with is smooth exterior surface, and that a sealing element (9) is located in the interior (8) of the male coupling connector (2).

3. A pluggable coupling for pressure lines in accordance with claim 1, characterized in that on the exterior (7) of the nipple (6) enclosed by the annular groove (5) a circular groove (13) has been cut, into which a sealing element (10) is inserted and that the interior (8) of the male connector (2) forms a smooth sealing face.

4. A pluggable coupling for pressure lines in accordance with one of the preceding claims, characterized in that the sealing elements (9,10) are molded parts which are inserted into the respective circular grooves (12,13).

5. A pluggable coupling for pressure lines in accordance with one of the preceding claims, characterized in that the female coupling connector (1) is disposed in the interior of a pivotable blocking member (20), and that this blocking member is sealingly seated in a housing (21), wherein the blocking member (20) with the male connector (2) inserted in it can be brought by pivoting from a conducting position to a blocking position and vice versa.

6. A pluggable coupling for pressure lines in accordance with claim 5, characterized in that the female coupling connector (1) constitutes the blocking member (20) and consists of one piece.

7. A pluggable coupling for pressure lines in accordance with one of the preceding claims, characterized in that the pivotable blocking member (20) can be locked in one or a plurality of pivot positions in that a spring-loaded pin (28) projects through the housing (21) radially in respect to the pivotable blocking member (20) and during pivoting runs with its dovetail-like thickened end in a form-fitting manner in a corresponding groove (29), extending around a portion of the circumference, in the blocking member (20) and which has recesses (31) in the radial direction in respect to the blocking member (20) in such a way that the thickening (32) is arrested under spring-loading in the recesses (31).

8. A pluggable coupling for pressure lines in accordance with claim 5 or 6, characterized in that the blocking member (20) is cylindrical and is secured in the housing (21) in the axial direction by the engagement of a grooved driving stud (22) in a circular groove (23) in the blocking member (20) through the housing (21).

9. A pluggable coupling for pressure lines in accordance with claim 4, characterized in that the blocking member (20) can be locked in one or a plurality of pivot positions by means of a pin (28) which engages a bore (30) in the blocking member (20) through the housing (21).

10. A pluggable coupling for pressure lines in accordance with one of claims 5 to 9, characterized in that at least one relief bore (19) on the female connector (1) terminates from the outside into the annular groove (5).

## Revendications

1. Raccord enfichable pour conduites sous pression, comportant une fiche de raccordement (2) et une douille de raccordement (1), cette dernière comportant deux orifices axiaux (3; 4) se raccordant l'un à l'autre et de diamètres différents, caractérisé en ce que, dans l'orifice de plus grand diamètre, il est pratiqué une rainure annulaire (5) autour de l'orifice (3) de plus petit diamètre (4), dans lequel la fiche d'étanchéité (2) peut s'enficher jointivement.

2. Raccord enfichable pour conduites sous pression suivant la revendication 1, caractérisé en ce que l'embout (6) entouré par la rainure annulaire (5) forme, avec sa surface extérieure lisse, une surface d'étanchéité (7) et qu'un élément d'étanchéité (9) se trouve à l'intérieur (8) de la fiche (2).

3. Raccord enfichable pour conduites sous pression suivant la revendication 1, caractérisé en ce qu'il est pratiqué sur la surface extérieure (7) de l'embout (6) entouré par la rainure annulaire (5) une rainure circulaire (13), dans laquelle est disposé un élément d'étanchéité (10), et que la surface intérieure (8) de la fiche (2) forme une surface d'étanchéité lisse.

4. Raccord enfichable pour conduites sous pression suivant une des revendications précédentes, caractérisé en ce que les éléments d'étanchéité (9; 10) sont des pièces moulées, insérées dans des rainures circulaires (12; 13) correspondantes.

5. Raccord enfichable pour conduites sous pression suivant une des revendications précédentes, caractérisé en ce que la douille de raccordement (1) est disposée à l'intérieur d'un organe de blocage pivotant (20), que cet organe de blocage (20) est logé étanche dans un boîtier (21), cependant qu'avec la fiche (2) enfichée, l'organe de blocage peut être amené, par pivotement, d'une position conductrice dans une position de blocage.

6. Raccord enfichable pour conduites sous pression suivant la revendication 5, caractérisé en ce que la douille de raccordement (1) forme l'organe de blocage (20) et qu'elle est réalisée d'une seule pièce.

7. Raccord enfichable pour conduites sous pression suivant une des revendications précédentes, caractérisé en ce que l'organe de blocage (20) pivotant est verrouillable dans une ou plusieurs positions de pivotement, en ce qu'un boulon (28) à ressort se déplace, avec son extrémité épaissie, dans une rainure correspondante (29), dont il épouse la forme, qui s'étend sur une partie du pourtour et est pratiquée dans l'organe de blocage (20), cette rainure présentant, aux emplacements de verrouillage (27), par rapport à l'organe de blocage (20), des évidements radiaux (31), de sorte que l'épaississement (32) s'encrante, sous la charge du ressort, dans les évidements (31).

8. Raccord enfichable pour conduites sous pression suivant la revendication 5 ou 6, caractérisé en ce que l'organe de blocage (20) est cylindrique et bloqué axialement dans le boîtier (21), du fait qu'une tige fendue (22) pénètre, à travers le boîtier (21), dans une rainure circulaire (23) de l'organe de blocage (20).

9. Raccord enfichable pour conduites sous pression suivant la revendication 4, caractérisé en ce que l'organe de blocage (20) est verrouillable dans une ou plusieurs positions de pivotement au moyen d'un boulon (28), qui pénètre, à travers le boîtier (21), dans un orifice (30) de l'organe de blocage (20).

10. Raccord enfichable pour conduites sous pression suivant une des revendications 5 à 9, caractérisé en ce qu'au moins un orifice de décharge (19) débouche dans la rainure annulaire (5).
